# EUROPEAN PATENT APPLICATION

(11) **EP 4 779 732 A1**
(43) Date of publication of application: **22.07.2026**
(21) Application number: 24926592.7
(22) Date of filing: 18.06.2024
(51) Int. Cl.: H01M 10/04

(54) **CELL WINDING APPARATUS AND METHOD**

(30) Priority: 26.02.2024 CN 202410205849
(71) Applicant: Contemporary Amperex Technology Co., Limited, Ningde, Fujian 352100 (CN)
(72) Inventor: GUO, Xin, Ningde, Fujian 352100 (CN); WU, Xiang, Ningde, Fujian 352100 (CN); ZHANG, Xiaowei, Ningde, Fujian 352100 (CN)
(74) Representative: Lorenz Seidler Gossel Part. mbB
(86) International application number: PCT/CN2024/099836
(87) International publication number: WO 2025/179721

(57) **Abstract**

Disclosed are a cell winding apparatus and method. The cell winding apparatus comprises an unwinding mechanism, a winding needle assembly, and an electrode sheet cutting-off device. The unwinding mechanism is configured to be capable of unwinding a first electrode sheet, a second electrode sheet, and a separator. The winding needle assembly is configured to be capable of overlapping the first electrode sheet, the second electrode sheet and the separator which are unwound by the unwinding mechanism and winding same into a wound structure, and at least one layer of separator is sandwiched between a first electrode sheet and a second electrode sheet adjacent to each other, The electrode sheet cutting-off device comprises a cutter and an adjusting mechanism; the adjusting mechanism and the cutter edge side of the cutter are provided with a path for the first electrode sheet to pass through; the adjusting mechanism is configured to enable a demarcated region to be cut off of the first electrode sheet to be opposite to the cutter edge of the cutter, and the cutter is configured to be capable of cutting off the first electrode sheet at said demarcated region. The adjusting mechanism of the cell winding apparatus can adjust a demarcated region to be cut off to be opposite to the cutter edge of the cutter, and the cutter can accurately cut off a first electrode sheet, thereby improving the consistency of bare cells, and improving the use performance of batteries.

## Description

### CROSS-REFERENCE TO RELATED APPLICATION

The present disclosure is presented based on Chinese Patent Application No. 202410205849.6, filed on February 26, 2024 and entitled "CELL WINDING EQUIPMENT AND METHOD FOR CELL WINDING", and claims priority to the Chinese Patent Application, the content of which is incorporated herein by reference in its entirety.

### TECHNICAL FIELD

The present disclosure relates to the technical field of battery manufacturing, and in particular, to cell winding equipment and a method for cell winding.

### BACKGROUND

New energy batteries are increasingly widely used in life and industry. For example, new energy vehicles equipped with batteries have been widely used. In addition, batteries are also increasingly used in the field of energy storage. As a common type of battery, a wound cell is relatively simple to manufacture, and can achieve high battery energy density and capacity. Therefore, the wound cell is widely applied in various electronic devices and mobile power supplies.

During the battery production process, the consistency of the bare cells wound by the winding equipment may affect the use performance of the battery. Poor consistency among the bare cells may reduce the available capacity and operating time of the entire battery, and accelerate the degradation and shorten the service life of some of the bare cells in the battery. In addition, some of the bare cells in the battery are prone to overheating and even have potential safety hazards. Therefore, improving the production consistency of the bare cells is one of the research topics that the industry needs to address.

### SUMMARY

To address the above technical problem, the present disclosure provides cell winding equipment and a method for cell winding for improving the production consistency of the bare cells.

The present disclosure is implemented by the following technical solutions.

A first aspect of the present disclosure provides a cell winding equipment, which includes: an unwinding mechanism configured to be capable of unwinding a first electrode plate, a second electrode plate, and a separator; a winding mandrel assembly configured to be capable of stacking the first electrode plate, the second electrode plate, and the separator unwound by the unwinding mechanism and winding same into a wound structure, at least one layer of the separator being interposed between any adjacent first electrode plate and second electrode plate; and an electrode plate cut-off apparatus including a cut-off knife and an adjustment mechanism, a path through which the first electrode plate passes being disposed on the adjustment mechanism and a cutting edge side of the cut-off knife, the adjustment mechanism being configured to enable a demarcation region to be cut off of the first electrode plate to be aligned with a cutting edge of the cut-off knife, and the cut-off knife being configured to be capable of cutting off the first electrode plate at the demarcation region to be cut off; where the adjustment mechanism includes at least one moving roller and at least two positioning rollers, the at least two positioning rollers are fixed in position and are spaced apart in a first direction, the moving roller is configured to be capable of reciprocating between adjacent positioning rollers in a second direction intersecting with the first direction, each positioning roller is disposed on one side of the first electrode plate, and each moving roller is disposed on another side of the first electrode plate.

During the process of winding the bare cells by using the cell winding equipment, the unwinding mechanism unwinds the first electrode plate, the second electrode plate, and the separator. Meanwhile, the winding mandrel assembly stacks the first electrode plate, the second electrode plate, and the separator unwound by the unwinding mechanism and winds same into the wound structure, and when one winding cycle is about to end, the demarcation region to be cut off of the first electrode plate is adjusted to be aligned with the cutting edge of the cut-off knife by the adjustment mechanism. In this way, the cut-off knife can accurately cut off the first electrode plate at the demarcation region to be cut off, such that the lengths of the first electrode plates of the formed bare cells are consistent, thereby improving the consistency of the bare cells, and improving the use performance of the battery. The specific structure of the adjustment mechanism allows the adjustment mechanism to achieve the function of adjusting the position of the first electrode plate. In addition, the adjustment mechanism has a simple structure, achieves low manufacturing costs, and is easy to operate.

In some embodiments, the adjustment mechanism further includes a first driving member, and the first driving member is in driving connection with the moving roller and can drive the moving roller to reciprocate in the second direction.

The first driving member is configured to drive the moving roller to move, thereby achieving the mechanical driving for the moving roller. As a result, the adjustment of the first electrode plate by the adjustment mechanism becomes more convenient and faster, which improves the efficiency of cutting off the first electrode plate and is thus conducive to improving the production efficiency of the battery.

In some embodiments, the electrode plate cut-off apparatus further includes a detector, and the detector is configured to detect whether the demarcation region to be cut off of the first electrode plate is aligned with the cutting edge.

By providing the detector, the automated detection of the movement position of the demarcation region to be cut off is achieved. This helps improve the detection accuracy.

In some embodiments, the detector includes an encoder and/or a detection camera.

In this way, the detector can detect the position of the demarcation region to be cut off of the first electrode plate, and the precision of detection is high.

In some embodiments, the number of cut-off knives is at least two, and the cut-off knives are disposed opposite to each other across the path.

In this way, the cutting efficiency of the electrode plate is improved, thereby improving the production efficiency of the battery. In addition, the accuracy of the cutting position is improved, thereby improving the consistency of the bare cells, and thus improving the use performance of the battery.

In some embodiments, in a conveying direction of the first electrode plate, the cut-off knife is positioned upstream of the adjustment mechanism.

In this way, after the first electrode plate is cut off, the free end of the first electrode plate on an upstream side of the cut-off knife is short, which facilitates the next winding cycle.

In some embodiments, the electrode plate cut-off apparatus further includes an electrode plate gripping roller group, and the electrode plate gripping roller group is configured to grip the first electrode plate when the demarcation region to be cut off of the first electrode plate is aligned with the cutting edge.

The electrode plate gripping roller group can grip the first electrode plate to limit the position of the first electrode plate. In this way, the state in which the demarcation region to be cut off is aligned with the cutting edge is more accurately maintained, thereby improving the cutting accuracy, improving the consistency of the bare cells, and thus improving the use performance of the battery.

In some embodiments, the unwinding mechanism includes at least two unwinding assemblies, and the unwinding assemblies are all configured to unwind the first electrode plate, the second electrode plate, and the separator, the winding mandrel assembly includes at least two winding mandrels, the at least two winding mandrels can simultaneously wind so as to obtain at least two wound structures, at least two adjustment mechanisms are provided, and the adjustment mechanisms are configured to adjust first electrode plates of the wound structures in a one-to-one correspondence manner.

In this way, the cell winding equipment can simultaneously wind so as to obtain the at least two wound structures, thereby improving the winding efficiency. In addition, the at least two adjustment mechanisms can adjust the first electrode plates of the at least two wound structures, respectively, and the cut-off knives can cut off the at least two adjusted first electrode plates at one time at the demarcation regions to be cut off, thereby improving the production efficiency of the bare cells while maintaining the consistency of the bare cells.

In some embodiments, the winding mandrel assembly further includes a winding mandrel mounting shaft, the winding mandrels are coaxially connected to the winding mandrel mounting shaft, and the at least two winding mandrels are spaced apart from each other in sequence in an axial direction of the winding mandrel mounting shaft and can rotate together with the winding mandrel mounting shaft.

The at least two winding mandrels can rotate together with the winding mandrel mounting shaft, to simultaneously wind so as to obtain the at least two wound structures, thereby improving the manufacturing efficiency of the bare cells. In addition, only one winding mandrel mounting shaft needs to be driven to rotate, thereby driving the two winding mandrels to rotate, which reduces the number of driving members and lowers costs.

In some embodiments, the unwinding assembly includes: a first electrode plate unwinding roller configured to unwind the first electrode plate; a second electrode plate unwinding roller configured to unwind the second electrode plate; and a separator unwinding roller configured to unwind the separator; where in the same unwinding assembly, the first electrode plate unwound by the first electrode plate unwinding roller, the second electrode plate unwound by the second electrode plate unwinding roller, and the separator unwound by the separator unwinding roller are wound into one wound structure through one winding mandrel.

In this way, the function of unwinding the first electrode plate, the second electrode plate, and the separator by the unwinding assembly is achieved. In addition, the unwinding assembly has a simple structure and achieves low costs.

In some embodiments, each winding mandrel can be transferred between a winding station and an electrode plate cut-off station, the winding mandrel is configured for winding so as to obtain the wound structure in the case that the winding mandrel is transferred to the winding station, and in the case that the winding mandrel is transferred to the electrode plate cut-off station, the first electrode plate of the wound structure wound around the winding mandrel passes through the path of the adjustment mechanism and the cutting edge side of the cut-off knife and is cut off at the demarcation region to be cut off by the cut-off knife.

The winding mandrel performs the winding operation at the winding station. Upon the winding is completed, the winding mandrel is transferred to the electrode plate cut-off station, and performs the operation of cutting off the first electrode plate at the electrode plate cut-off station. In this case, the winding operation of the next cycle starts at the winding station; that is, the winding operations of adjacent cycles overlap in production time, thereby improving the production efficiency of the bare cells.

In some embodiments, a first electrode plate tension control mechanism is disposed between each first electrode plate unwinding roller and the winding mandrel assembly, and the first electrode plate tension control mechanism is configured to control the tension of the first electrode plate unwound by the first electrode plate unwinding roller; and/or, a second electrode plate tension control mechanism is disposed between each second electrode plate unwinding roller and the winding mandrel assembly, and the second electrode plate tension control mechanism is configured to control the tension of the second electrode plate unwound by the second electrode plate unwinding roller; and/or, a separator tension control mechanism is disposed between each separator unwinding roller and the winding mandrel assembly, and the separator tension control mechanism is configured to control the tension of the separator unwound by the separator unwinding roller.

In this way, the tension of the first electrode plate, the second electrode plate, and the separator during the winding process can be controlled, thereby improving the winding uniformity and improving the processing quality of the bare cells.

In some embodiments, a first electrode plate deviation correction system is disposed between the first electrode plate unwinding roller and the winding mandrel assembly, and the first electrode plate deviation correction system is configured to correct a position of the first electrode plate unwound by the first electrode plate unwinding roller in a winding axial direction of the first electrode plate; and/or, a second electrode plate deviation correction system is disposed between the second electrode plate unwinding roller and the winding mandrel assembly, and the second electrode plate deviation correction system is configured to correct a position of the second electrode plate unwound by the second electrode plate unwinding roller in a winding axial direction of the second electrode plate; and/or, a separator deviation correction system is disposed between the separator unwinding roller and the winding mandrel assembly, and the separator deviation correction system is configured to correct a position of the separator unwound by the separator unwinding roller in a winding axial direction of the separator.

In this way, the positions of the first electrode plate, the second electrode plate, and the separator in the winding axial directions during the winding process can be corrected, thereby eliminating the deviation of the wound structure, and improving the uniformity and consistency of the bare cells.

A second aspect of the present disclosure provides a method for cell winding using cell winding equipment. The cell winding equipment includes: an unwinding mechanism configured to be capable of unwinding a first electrode plate, a second electrode plate, and a separator; a winding mandrel assembly configured to be capable of stacking the first electrode plate, the second electrode plate, and the separator unwound by the unwinding mechanism and winding same into a wound structure, at least one layer of the separator being interposed between any adjacent first electrode plate and second electrode plate; and an electrode plate cut-off apparatus including a cut-off knife and an adjustment mechanism, a path through which the first electrode plate passes being disposed on the adjustment mechanism and a cutting edge side of the cut-off knife, the adjustment mechanism being configured to enable a demarcation region to be cut off of the first electrode plate to be aligned with a cutting edge of the cut-off knife, and the cut-off knife being configured to be capable of cutting off the first electrode plate at the demarcation region to be cut off;
the method for cell winding including:
an unwinding step, where the unwinding mechanism unwinds the first electrode plate, the second electrode plate, and the separator;
a winding step, where the winding mandrel assembly winds the first electrode plate, the second electrode plate, and the separator into the wound structure according to a set number of turns, and then the winding is stopped;
an adjusting step, where the adjustment mechanism enables the demarcation region to be cut off of the first electrode plate to be aligned with the cutting edge; and
a cutting step, where the cut-off knife cuts off the first electrode plate at the demarcation region to be cut off;
where the adjustment mechanism includes at least one moving roller and at least two positioning rollers, the at least two positioning rollers are fixed in position and are spaced apart in a first direction, the moving roller is configured to be capable of reciprocating between adjacent positioning rollers in a second direction intersecting with the first direction, each positioning roller is disposed on one side of the first electrode plate, and each moving roller is disposed on another side of the first electrode plate;
the adjusting step includes:
   a moving step, where the moving roller moves in the second direction to drive the first electrode plate to be conveyed along the path; and
   an alignment stopping step, where the moving roller stops moving when the demarcation region to be cut off of the first electrode plate is moved to be aligned with the cutting edge.

During the above winding process, the position of the demarcation region to be cut off is first adjusted through the movement of the moving roller. When the demarcation region to be cut off is moved to be aligned with the cutting edge, the moving roller stops moving, so as to maintain the state in which the demarcation region to be cut off is aligned with the cutting edge. In this way, the cut-off knife can accurately cut off the first electrode plate at the demarcation region to be cut off, such that the lengths of the first electrode plates of the formed bare cells are consistent, thereby improving the consistency of the bare cells, and improving the use performance of the battery.

In some embodiments, the adjustment mechanism further includes a detector, and the detector is configured to detect whether the demarcation region to be cut off of the first electrode plate is aligned with the cutting edge;
the alignment stopping step includes:
an alignment detection step, where the detector detects whether the demarcation region to be cut off is aligned with the cutting edge, when the demarcation region to be cut off is aligned with the cutting edge, a stopping step is performed, and when the demarcation region to be cut off is not aligned with the cutting edge, the moving step is performed; and
the stopping step, where the moving roller stops moving.

When the detector detects that the demarcation region to be cut off of the first electrode plate is not aligned with the cutting edge, the moving roller continues to move. When the detector detects that the demarcation region to be cut off of the first electrode plate is aligned with the cutting edge, the moving roller stops moving, maintaining the state in which the demarcation region to be cut off is aligned with the cutting edge. Then, when the cut-off knife cuts the first electrode plate, the cut-off knife can accurately cut off the first electrode plate at the demarcation region to be cut off.

In some embodiments, the electrode plate cut-off apparatus further includes an electrode plate gripping roller group, and the electrode plate gripping roller group is configured to grip the first electrode plate when the demarcation region to be cut off of the first electrode plate is aligned with the cutting edge;
between the stopping step and the cutting step,
a gripping step, where the electrode plate gripping roller group grips the first electrode plate whose demarcation region to be cut off is aligned with the cutting edge, is included.

The electrode plate gripping roller group can grip the first electrode plate to limit the position of the first electrode plate. In this way, the state in which the demarcation region to be cut off is aligned with the cutting edge is more accurately maintained, thereby improving the cutting accuracy, improving the consistency of the bare cells, and thus improving the use performance of the battery.

In some embodiments, the unwinding mechanism includes at least two unwinding assemblies, and the unwinding assemblies are all configured to unwind the first electrode plate, the second electrode plate, and the separator, the winding mandrel assembly includes at least two winding mandrels, the at least two winding mandrels can simultaneously wind so as to obtain at least two wound structures, at least two adjustment mechanisms are provided, and the adjustment mechanisms are configured to adjust first electrode plates of the wound structures in a one-to-one correspondence manner;
in the unwinding step, the unwinding assemblies simultaneously unwind respective first electrode plates, second electrode plates, and separators;
in the winding step, the at least two winding mandrels simultaneously wind so as to obtain the at least two wound structures;
in the adjusting step, the at least two adjustment mechanisms simultaneously adjust the first electrode plates of the wound structures in a one-to-one correspondence manner;
in the cutting step, cut-off knives simultaneously cut off at least two first electrode plates.

In this way, the at least two wound structures can be obtained by simultaneously winding, thereby improving the winding efficiency. In addition, the adjustment mechanisms can simultaneously adjust the first electrode plates of the at least two wound structures, and the cut-off knives can cut off the at least two adjusted first electrode plates at one time at the demarcation regions to be cut off, thereby improving the production efficiency of the bare cells while maintaining the consistency of the bare cells.

### Advantageous Effects of Invention

Through the present disclosure, cell winding equipment and a method for cell winding capable of improving the production consistency of the bare cells are provided.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a front view of an electrode plate cut-off apparatus according to some embodiments of the present disclosure;
FIG. 2 is a side view of an electrode plate cut-off apparatus according to some embodiments of the present disclosure;
FIG. 3 is a schematic structural diagram of cell winding equipment according to some embodiments of the present disclosure;
FIG. 4 is a schematic structural diagram of a winding station of cell winding equipment according to some embodiments of the present disclosure;
FIG. 5 is a flowchart of a method for cell winding according to some embodiments of the present disclosure;
FIG. 6 is a flowchart of an adjusting step in a method for cell winding according to some embodiments of the present disclosure;
FIG. 7 is another flowchart of an adjusting step in a method for cell winding according to some embodiments of the present disclosure; and
FIG. 8 is another flowchart of a method for cell winding according to some embodiments of the present disclosure.

### Description of the reference numerals:

1000 wound structure; 100 first electrode plate; 101 demarcation region to be cut off; 200 second electrode plate; 300 separator; 10 electrode plate cut-off apparatus; 1 adjustment mechanism; 11 moving roller; 12 positioning roller; 2 cut-off knife; 3 detection camera; 4 electrode plate gripping roller group; 41 gripping roller; 201 first electrode plate unwinding roller; 202 second electrode plate unwinding roller; 203 separator unwinding roller; 301 winding mandrel; 302 winding mandrel mounting shaft; 401 first electrode plate tension control apparatus; 402 second electrode plate tension control apparatus; 403 separator tension control apparatus; 501 first electrode plate deviation correction apparatus; 502 second electrode plate deviation correction apparatus; 60 second electrode plate cutting apparatus.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure relates. The terms used herein are intended to merely describe the specific embodiments, rather than to limit the present disclosure. The terms "include", "comprise", "have", and "provided with", and any other variations thereof in this specification and the description of the drawings of the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means at least two.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly appreciated by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on those shown in the drawings. They are merely for the convenience of describing the embodiments of the present disclosure and simplifying the description, rather than indicating or implying that the apparatus or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

The present disclosure is described in detail below.

At present, new energy batteries are increasingly applied in life and industry. New energy batteries are not only applied in energy storage power systems such as hydropower, thermal power, wind power, and solar power stations, but are also widely applied in electric transportation vehicles such as electric bicycles, electric motorcycles, electric vehicles, as well as in aerospace and other fields. With the continuous expansion of the application field of power batteries, the market demand for power batteries is also constantly increasing.

The battery may include one or more battery cells. The battery cell may be a secondary battery, which refers to a battery cell that can continue to be used by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The battery cell includes a bare cell (sometimes referred to as a "cell" for short). The bare cell includes a positive electrode plate, a negative electrode plate, and a separator. The positive electrode plate may include a positive electrode current collector and a positive electrode active material disposed on at least one surface of the positive electrode current collector, the negative electrode plate may include a negative electrode current collector and a negative electrode active material disposed on at least one surface of the negative electrode current collector, and the separator is disposed between the positive electrode plate and the negative electrode plate.

The bare cell may include a wound structure. The positive electrode plate, the negative electrode plate, and the separator are wound into a wound structure.

A wound bare cell is relatively simple to manufacture, and can achieve high battery energy density and capacity. Therefore, the wound bare cell is widely applied in various electronic devices and mobile power supplies. During the battery production process, the consistency of the bare cells wound by the winding equipment may affect the use performance of the battery. Poor consistency among the bare cells may reduce the available capacity and operating time of the entire battery, and accelerate the degradation and shorten the service life of some of the bare cells in the battery. In addition, some of the bare cells in the battery are prone to overheating and even have potential safety hazards. Therefore, improving the production consistency of the bare cells is one of the research topics that the industry needs to address.

When one winding cycle of the cell winding equipment is about to end, the electrode plate needs to be cut off at the blue adhesive at the cut-off position on the electrode plate. The inventors of the present disclosure have noticed that, when one winding cycle of the existing cell winding equipment is about to end, the wound structure formed by winding is transferred from the winding station to the electrode plate cut-off station, and the negative electrode plate is cut off at the electrode plate cut-off station. This transfer process tends to cause a deviation of the blue adhesive at the cut-off position of the negative electrode plate relative to the cutting edge of the cut-off knife, resulting in inaccurate cutting of the negative electrode plate by the cut-off knife. Consequently, the negative electrode plates in the bare cells wound by the cell winding equipment may have inconsistent lengths, which adversely affects the production consistency of the bare cells.

The inventors of the present disclosure have found through research that an adjustment mechanism capable of enabling the blue adhesive at the cut-off position of the negative electrode plate to be aligned with the cutting edge of the cut-off knife is added to the cell winding equipment, and when one winding cycle of the cell winding equipment is about to end, the blue adhesive at the cut-off position of the negative electrode plate is adjusted to be aligned with the cutting edge of the cut-off knife by the adjustment mechanism. In this way, the cut-off knife can accurately cut off the negative electrode plate at the blue adhesive at the cut-off position, such that the lengths of the negative electrode plates of the formed bare cells are consistent, thereby improving the consistency of the bare cells, and improving the use performance of the battery.

Based on such a design concept, the inventors of the present disclosure have designed cell winding equipment. The cell winding equipment includes an unwinding mechanism, a winding mandrel assembly, and an electrode plate cut-off apparatus. The electrode plate cut-off apparatus includes a cut-off knife and an adjustment mechanism, a path through which the first electrode plate passes is disposed on the adjustment mechanism and a cutting edge side of the cut-off knife, the adjustment mechanism is configured to enable a demarcation region to be cut off of the first electrode plate to be aligned with a cutting edge, and the cut-off knife is configured to be capable of cutting off the first electrode plate at the demarcation region to be cut off.

During a process of winding the bare cells by using the cell winding equipment, since the blue adhesive at the cut-off position of the negative electrode plate is enabled to be aligned with the cutting edge by using the adjustment mechanism, the cut-off knife can accurately cut off the negative electrode plate at the blue adhesive at the cut-off position, such that the lengths of the negative electrode plates of the formed bare cells are consistent, thereby improving the consistency of the bare cells, and improving the use performance of the battery.

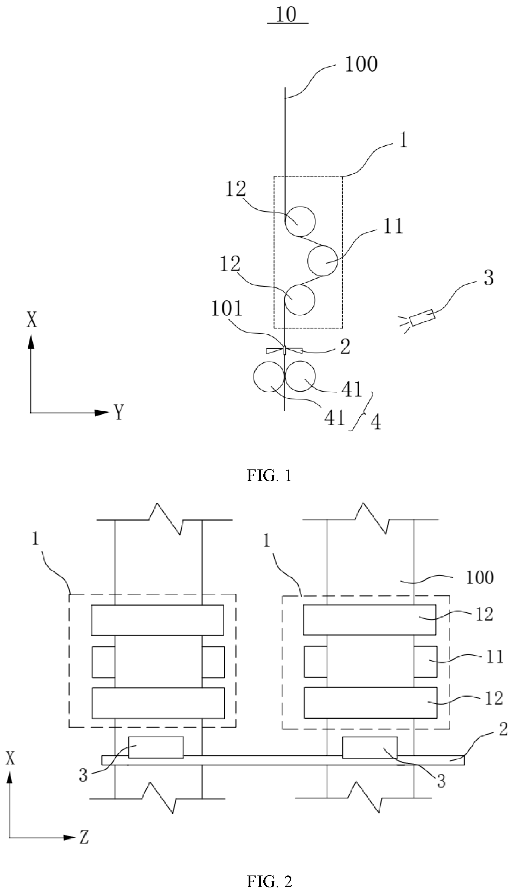

Some embodiments of the present disclosure will be described in detail below with reference to FIGs. 1 to 8.

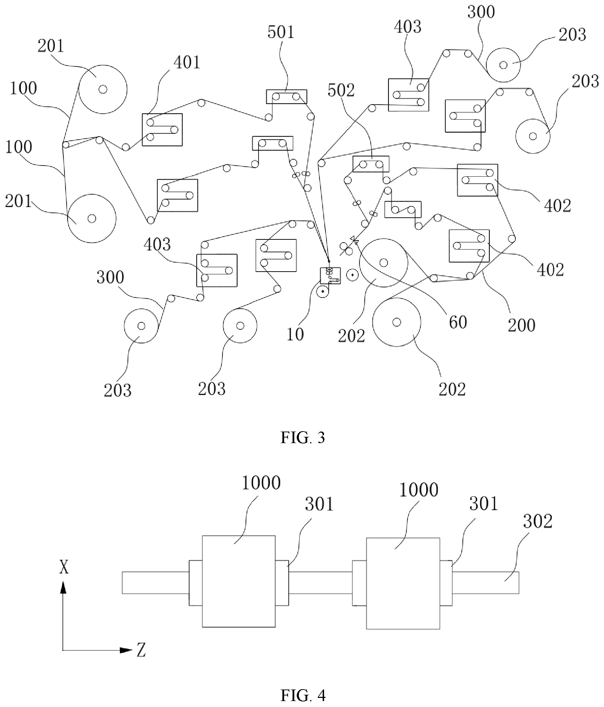

FIG. 1 is a front view of an electrode plate cut-off apparatus according to some embodiments of the present disclosure; FIG. 2 is a side view of an electrode plate cut-off apparatus according to some embodiments of the present disclosure; FIG. 3 is a schematic structural diagram of cell winding equipment according to some embodiments of the present disclosure; and FIG. 4 is a schematic structural diagram of a winding station of cell winding equipment according to some embodiments of the present disclosure.

In some embodiments of the present disclosure, for ease of description, a first direction, a second direction, and a third direction are set, and the first direction, the second direction, and the third direction are directions intersecting with each other. Herein, "intersecting with each other" includes "perpendicularly intersecting with each other". In order to facilitate understanding of the embodiments of the present disclosure, in the embodiments shown in FIGs. 1 to 4, the first direction, the second direction, and the third direction are described as examples of directions perpendicularly intersecting with each other, but those skilled in the art should understand that the embodiments of the present disclosure are not limited to the case where the three directions perpendicularly intersect with each other. For ease of description, as shown by arrows in FIGs. 1, 2, and 4, a direction of an arrow X is used as the first direction, a direction of an arrow Y is used as the second direction, and a direction of an arrow Z is used as the third direction.

As shown in FIGs. 1 and 2, the embodiments of the present disclosure provide cell winding equipment. The cell winding equipment includes an unwinding mechanism, a winding mandrel assembly, and an electrode plate cut-off apparatus 10. The unwinding mechanism is configured to be capable of unwinding a first electrode plate 100, a second electrode plate 200, and a separator 300. The winding mandrel assembly is configured to be capable of stacking the first electrode plate 100, the second electrode plate 200, and the separator 300 unwound by the unwinding mechanism and winding same into a wound structure 1000, and at least one layer of the separator 300 is interposed between any adjacent first electrode plate 100 and second electrode plate 200. The electrode plate cut-off apparatus 10 includes a cut-off knife 2 and an adjustment mechanism 1, a path through which the first electrode plate 100 passes is disposed on the adjustment mechanism 1 and a cutting edge side of the cut-off knife 2, the adjustment mechanism 1 is configured to enable a demarcation region to be cut off 101 of the first electrode plate 100 to be aligned with a cutting edge, and the cut-off knife 2 is configured to be capable of cutting off the first electrode plate 100 at the demarcation region to be cut off 101.

The first electrode plate 100 may be a negative electrode plate, the adjustment mechanism 1 may enable the demarcation region to be cut off 101 of the negative electrode plate to be aligned with the cutting edge, and the cut-off knife 2 is configured to be capable of cutting off the negative electrode plate at the demarcation region to be cut off 101.

The negative electrode plate may include a negative electrode current collector. As an example, a metal foil, a foam metal, or a composite current collector may be used as the negative electrode current collector. For example, for the metal foil, aluminum or stainless steel treated with silver on the surface, stainless steel, copper, aluminum, nickel, titanium, or the like may be used. The composite current collector may include a polymer material base layer and a metal layer. The foam metal may be foam nickel, foam copper, foam aluminum, foam alloy, or the like. The composite current collector may be fabricated by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene). In some embodiments, the material of the positive electrode current collector may be aluminum, and the material of the negative electrode current collector may be copper.

The first electrode plate 100 may be a positive electrode plate, the adjustment mechanism 1 may enable the demarcation region to be cut off 101 of the positive electrode plate to be aligned with the cutting edge, and the cut-off knife 2 is configured to be capable of cutting off the positive electrode plate at the demarcation region to be cut off 101.

The positive electrode plate may include a positive electrode current collector and a positive electrode active material disposed on at least one surface of the positive electrode current collector.

As an example, the positive electrode current collector has two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present disclosure is not limited to these materials, and other conventional materials that can be used as the positive electrode active material in batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, a foam metal may be used as the positive electrode current collector. The foam metal may be foam nickel, foam copper, foam aluminum, foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into or/and deposited in the foam metal; the lithium source material is a lithium metal and/or a lithium-rich material.

The separator 300 is a separation film. The present disclosure does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator 300 is a solid-state electrolyte. The solid-state electrolyte is disposed between the positive electrode and the negative electrode, serving both to transport ions and to isolate the positive electrode and the negative electrode.

The demarcation region to be cut off 101 includes the blue adhesive at the cut-off position of the negative electrode plate or the positive electrode plate. The blue adhesive at the cut-off position is a tape material affixed to the electrode plate in battery production, to mark or indicate the cutting position for accurate cutting operations during the manufacturing steps.

During the process of winding the bare cells by using the cell winding equipment, the unwinding mechanism unwinds the first electrode plate 100, the second electrode plate 200, and the separator 300. Meanwhile, the winding mandrel assembly stacks the first electrode plate 100, the second electrode plate 200, and the separator 300 unwound by the unwinding mechanism and winds same into the wound structure 1000, and when one winding cycle is about to end, the demarcation region to be cut off 101 of the first electrode plate 100 is adjusted to be aligned with the cutting edge of the cut-off knife 2 by the adjustment mechanism 1. In this way, the cut-off knife 2 can accurately cut off the first electrode plate 100 at the demarcation region to be cut off 101, such that the lengths of the first electrode plates 100 of the formed bare cells are consistent, thereby improving the consistency of the bare cells, and improving the use performance of the battery.

In some embodiments of the present disclosure, the adjustment mechanism 1 includes at least one moving roller 11 and at least two positioning rollers 12. The at least two positioning rollers 12 are fixed in position and are spaced apart in a first direction, the moving roller 11 is configured to be capable of reciprocating between adjacent positioning rollers 12 in a second direction intersecting with the first direction. Each positioning roller 12 is disposed on one side of the first electrode plate 100, and each moving roller 11 is disposed on another side of the first electrode plate 100.

Illustratively, the adjustment mechanism 1 includes one moving roller 11 and two positioning rollers 12. The two positioning rollers 12 are fixed in position and are spaced apart in the first direction, the moving roller 11 is configured to be capable of reciprocating between the two positioning rollers 12 in the second direction intersecting with the first direction. The two positioning rollers 12 are disposed on one side of the first electrode plate 100, and the moving roller 11 is disposed on another side of the first electrode plate 100.

The positioning rollers 12 and the moving roller 11 are located on opposite sides of the first electrode plate 100. Therefore, when the moving roller 11 moves toward the first electrode plate 100 in the second direction, the moving roller drives the first electrode plate 100 to be conveyed, and the first electrode plate 100 is moved along the path on the cutting edge side. As a result, the demarcation region to be cut off 101 can be moved to face the cutting edge directly. When the demarcation region to be cut off is aligned with the cutting edge, the moving roller 11 stops moving, maintaining the state in which the demarcation region to be cut off is aligned with the cutting edge. In this case, the cut-off knife 2 can cut off the first electrode plate 100 at the demarcation region to be cut off.

In this way, the function of adjusting the position of the first electrode plate 100 by the adjustment mechanism 1 is achieved. In addition, the adjustment mechanism 1 has a simple structure, achieves low manufacturing costs, and is easy to operate.

In some embodiments of the present disclosure, the adjustment mechanism 1 further includes a first driving member, and the first driving member is in driving connection with the moving roller 11 and can drive the moving roller 11 to reciprocate in the second direction.

The first driving member includes, but is not limited to, a motor. As a specific example, for example, a servo motor may be used.

The first driving member is configured to drive the moving roller 11 to move, thereby achieving the mechanical driving for the moving roller 11. As a result, the adjustment of the first electrode plate 100 by the adjustment mechanism 1 becomes more convenient and faster, which improves the efficiency of cutting off the first electrode plate and is thus conducive to improving the production efficiency of the battery.

In some embodiments of the present disclosure, the electrode plate cut-off apparatus 10 includes a detector, and the detector is configured to detect whether the demarcation region to be cut off 101 of the first electrode plate 100 is aligned with the cutting edge.

When the detector detects that the demarcation region to be cut off 101 of the first electrode plate 100 is not aligned with the cutting edge, the moving roller 11 continues to move. When the detector detects that the demarcation region to be cut off 101 of the first electrode plate 100 is aligned with the cutting edge, the moving roller 11 stops moving, maintaining the state in which the demarcation region to be cut off 101 is aligned with the cutting edge. Then, when the cut-off knife 2 cuts the first electrode plate 100, the cut-off knife 2 can accurately cut off the first electrode plate 100 at the demarcation region to be cut off 101.

By providing the detector, the automated detection of the movement position of the demarcation region to be cut off 101 is achieved. This helps improve the detection accuracy.

In some embodiments of the present disclosure, the detector includes an encoder and/or a detection camera 3.

Illustratively, the detector includes the encoder. The encoder is used in combination with the driving system that drives the first electrode plate 100 to be wound, such that the position of the demarcation region to be cut off 101 of the first electrode plate 100 can be precisely controlled and positioned, thereby improving the detection accuracy.

Illustratively, the detector includes the detection camera 3. The detection camera 3 captures an image of the portion of the first electrode plate 100 that is aligned with the cutting edge, and determines, by comparing the image with a pre-stored image, whether the demarcation region to be cut off 101 of the first electrode plate 100 is aligned with the cutting edge.

Illustratively, the detector includes the encoder and the detection camera 3. Two detectors are combined to detect the position of the demarcation region to be cut off 101, thereby further improving the detection accuracy.

As for the selection of the encoder and the detection camera 3, the present disclosure is not particularly limited thereto as long as they are suitable for use in the electrode plate cut-off apparatus 10. They may be self-manufactured or commercially available products.

In this way, the detector can detect the position of the demarcation region to be cut off 101 of the first electrode plate 100, and the precision of detection is high.

In some embodiments of the present disclosure, the number of cut-off knives 2 is at least two, and the cut-off knives are disposed opposite to each other across the path.

Illustratively, the number of the cut-off knives 2 is two, and the cut-off knives are disposed opposite to each other across the path.

During the cutting process, the opposite cut-off knives 2 move toward each other. During the process where the cut-off knives move toward each other, the cutting edges come into contact with the opposite sides of the demarcation region to be cut off 101 of the first electrode plate 100, respectively. The cutting edges on the two sides simultaneously cut the first electrode plate 100, thereby improving the cutting efficiency. In addition, during the process from the cut-off knives 2 coming into contact with the demarcation region to be cut off 101 to the first electrode plate 100 being cut off, the demarcation region to be cut off 101 is interposed between the cut-off knives 2 on the two sides and is not moved. Therefore, the cut-off knives 2 can accurately cut off the first electrode plate 100 at the demarcation region to be cut off 101.

In this way, the cutting efficiency of the electrode plate is improved, thereby improving the production efficiency of the battery. In addition, the accuracy of the cutting position is improved, thereby improving the consistency of the bare cells, and thus improving the use performance of the battery.

In some embodiments of the present disclosure, in a conveying direction of the first electrode plate 100, the cut-off knife 2 is positioned upstream of the adjustment mechanism 1.

In this way, after the first electrode plate 100 is cut off, the free end of the first electrode plate 100 on an upstream side of the cut-off knife 2 is short, which facilitates the next winding cycle.

In some embodiments of the present disclosure, the electrode plate cut-off apparatus 10 further includes an electrode plate gripping roller group 4, and the electrode plate gripping roller group 4 is configured to grip the first electrode plate 100 when the demarcation region to be cut off 101 of the first electrode plate 100 is aligned with the cutting edge.

The electrode plate gripping roller group 4 can grip the first electrode plate 100 to limit the position of the first electrode plate 100. In this way, the state in which the demarcation region to be cut off 101 is aligned with the cutting edge is more accurately maintained, thereby improving the cutting accuracy, improving the consistency of the bare cells, and thus improving the use performance of the battery.

Illustratively, the electrode plate gripping roller group 4 is disposed proximal to the cut-off knife 2, which can well limit the position of the first electrode plate 100. The electrode plate gripping roller group 4 may be disposed between the cut-off knife 2 and the adjustment mechanism 1, or may be disposed on a side of the cut-off knife 2 distal to the adjustment mechanism 1.

In some embodiments of the present disclosure, the electrode plate gripping roller group 4 includes at least two gripping rollers 41. The at least two gripping rollers 41 are disposed opposite to each other across the first electrode plate 100, and the at least two gripping rollers 41 can move toward or away from each other under the action of the second driving member.

Illustratively, the electrode plate gripping roller group 4 includes two gripping rollers 41. The two gripping rollers 41 are disposed opposite to each other across the first electrode plate 100, and the two gripping rollers 41 can move toward or away from each other under the action of the second driving member.

The second driving member includes, but is not limited to, a motor. As a specific example, for example, a servo motor may be used.

When the demarcation region to be cut off 101 is aligned with the cutting edge, the gripping rollers 41 on the opposite sides of the first electrode plate 100 move toward each other to grip the first electrode plate 100, thereby limiting the position of the first electrode plate 100. In this way, the state in which the demarcation region to be cut off 101 is aligned with the cutting edge is more accurately maintained, thereby improving the cutting accuracy, improving the consistency of the bare cells, and thus improving the use performance of the battery.

In some embodiments of the present disclosure, the unwinding mechanism includes at least two unwinding assemblies, the unwinding assemblies are all configured to unwind the first electrode plate 100, the second electrode plate 200, and the separator 300, the winding mandrel assembly includes at least two winding mandrels 301, the at least two winding mandrels 301 can simultaneously wind so as to obtain at least two wound structures 1000, at least two adjustment mechanisms 1 are provided, and the adjustment mechanisms 1 are configured to adjust first electrode plates 100 of the wound structures 1000 in a one-to-one correspondence manner.

In this way, the cell winding equipment can simultaneously wind so as to obtain the at least two wound structures 1000, thereby improving the winding efficiency. In addition, the at least two adjustment mechanisms 1 can adjust the first electrode plates 100 of the at least two wound structures 1000, respectively, and the cut-off knives 2 can cut off the at least two adjusted first electrode plates 100 at one time at the demarcation regions to be cut off 101, thereby improving the production efficiency of the bare cells while maintaining the consistency of the bare cells.

In some embodiments of the present disclosure, the winding mandrel assembly further includes a winding mandrel mounting shaft 302, the winding mandrels 301 are coaxially connected to the winding mandrel mounting shaft 302, and the at least two winding mandrels 301 are spaced apart from each other in sequence in an axial direction of the winding mandrel mounting shaft 302 and can rotate together with the winding mandrel mounting shaft 302.

It should be noted that the winding mandrel mounting shaft 302 extends in a third direction that intersects with both the first direction and the second direction. Therefore, the winding mandrel 301 extends in the third direction, and the first electrode plate 100, the second electrode plate 200, and the separator 300 rotate around the third direction; that is, winding axial directions of the first electrode plate 100, the second electrode plate 200, and the separator 300 are all the third direction.

The at least two winding mandrels 301 can rotate together with the winding mandrel mounting shaft 302, to simultaneously wind so as to obtain the at least two wound structures 1000, thereby improving the manufacturing efficiency of the bare cells. In addition, only one winding mandrel mounting shaft 302 needs to be driven to rotate, thereby driving the two winding mandrels 301 to rotate, which reduces the number of driving members and lowers costs.

In some embodiments of the present disclosure, the unwinding assembly includes a first electrode plate unwinding roller 201, a second electrode plate unwinding roller 202, and a separator unwinding roller 203. The first electrode plate unwinding roller 201 is configured to unwind the first electrode plate 100; the second electrode plate unwinding roller 202 is configured to unwind the second electrode plate 200; and the separator unwinding roller 203 is configured to unwind the separator 300. In the same unwinding assembly, the first electrode plate 100 unwound by the first electrode plate unwinding roller 201, the second electrode plate 200 unwound by the second electrode plate unwinding roller 202, and the separator 300 unwound by the separator unwinding roller 203 are wound into one wound structure 1000 through one winding mandrel 301.

In this way, the function of unwinding the first electrode plate 100, the second electrode plate 200, and the separator 300 by the unwinding assembly is achieved. In addition, the unwinding assembly has a simple structure and achieves low costs.

It can be understood that in the wound structure 1000, the separator 300 is disposed between the first electrode plate 100 and the second electrode plate 200. Therefore, two separator unwinding rollers 203 are disposed in the same unwinding assembly for unwinding one separator 300 each.

It should be noted that each first electrode plate unwinding roller 201, each second electrode plate unwinding roller 202, and each separator unwinding roller 203 is connected to a driving member that drives the respective roller to rotate, so as to achieve the functions of unwinding the first electrode plate 100, the second electrode plate 200, and the separator 300.

In some embodiments of the present disclosure, each winding mandrel 301 can be transferred between a winding station and an electrode plate cut-off station, the winding mandrel 301 is configured for winding so as to obtain the wound structure 1000 in the case that the winding mandrel is transferred to the winding station, and in the case that the winding mandrel 301 is transferred to the electrode plate cut-off station, the first electrode plate 100 of the wound structure 1000 wound around the winding mandrel 301 passes through the path of the adjustment mechanism 1 and the cutting edge side of the cut-off knife 2 and is cut off at the demarcation region to be cut off 101 by the electrode plate cut-off apparatus 10.

The winding mandrel 301 performs the winding operation at the winding station. Upon the winding is completed, the winding mandrel is transferred to the electrode plate cut-off station, and performs the operation of cutting off the first electrode plate 100 at the electrode plate cut-off station. In this case, the winding operation of the next cycle starts at the winding station; that is, the winding operations of adjacent cycles overlap in production time, thereby improving the production efficiency of the bare cells.

In some embodiments of the present disclosure, the first electrode plate 100 is a negative electrode plate, the second electrode plate 200 is a positive electrode plate, the cell winding equipment further includes a second electrode plate cutting apparatus 60, and the second electrode plate cutting apparatus 60 is configured to cut off the second electrode plate 200 of the wound structure 1000 at the winding station.

In this way, when one winding cycle of the cell winding equipment is about to end, the second electrode plate cutting apparatus 60 cuts off the positive electrode plate, and then the wound structure 1000 is transferred from the winding station to the electrode plate cut-off station, such that the negative electrode plate and the separator 300 stacked and bonded with the negative electrode plate enter the path of the adjustment mechanism 1 and the cutting edge side of the cut-off knife 2. Then, the adjustment mechanism 1 adjusts the negative electrode plate such that the demarcation region to be cut off 101 is aligned with the cutting edge, and the cut-off knife 2 cuts off the negative electrode plate at the demarcation region to be cut off 101.

In some embodiments of the present disclosure, a first electrode plate tension control apparatus 401 is disposed between each first electrode plate unwinding roller 201 and the winding mandrel assembly, and the first electrode plate tension control apparatus 401 is configured to control the tension of the first electrode plate 100 unwound by the first electrode plate unwinding roller 201; and/or, a second electrode plate tension control apparatus 402 is disposed between each second electrode plate unwinding roller 202 and the winding mandrel assembly, and the second electrode plate tension control apparatus 402 is configured to control the tension of the second electrode plate 200 unwound by the second electrode plate unwinding roller 202; and/or, a separator tension control apparatus 403 is disposed between each separator unwinding roller 203 and the winding mandrel assembly, and the separator tension control apparatus 403 is configured to control the tension of the separator 300 unwound by the separator unwinding roller 203.

In this way, the tension of the first electrode plate 100, the second electrode plate 200, and the separator 300 during the winding process can be controlled, thereby improving the winding uniformity and improving the processing quality of the bare cells.

In some embodiments of the present disclosure, a first electrode plate deviation correction apparatus 501 is disposed between the first electrode plate unwinding roller 201 and the winding mandrel assembly, and the first electrode plate deviation correction apparatus 501 is configured to correct a position of the first electrode plate 100 unwound by the first electrode plate unwinding roller 201 in a winding axial direction of the first electrode plate 100; and/or, a second electrode plate deviation correction apparatus 502 is disposed between the second electrode plate unwinding roller 202 and the winding mandrel assembly, and the second electrode plate deviation correction apparatus 502 is configured to correct a position of the second electrode plate 200 unwound by the second electrode plate unwinding roller 202 in a winding axial direction of the second electrode plate 200; and/or, a separator deviation correction apparatus is disposed between the separator unwinding roller 203 and the winding mandrel assembly, and the separator deviation correction apparatus is configured to correct a position of the separator 300 unwound by the separator unwinding roller 203 in a winding axial direction of the separator 300.

In this way, the positions of the first electrode plate 100, the second electrode plate 200, and the separator 300 in the winding axial directions during the winding process can be corrected, thereby eliminating the deviation of the wound structure 1000, and improving the uniformity and consistency of the bare cells.

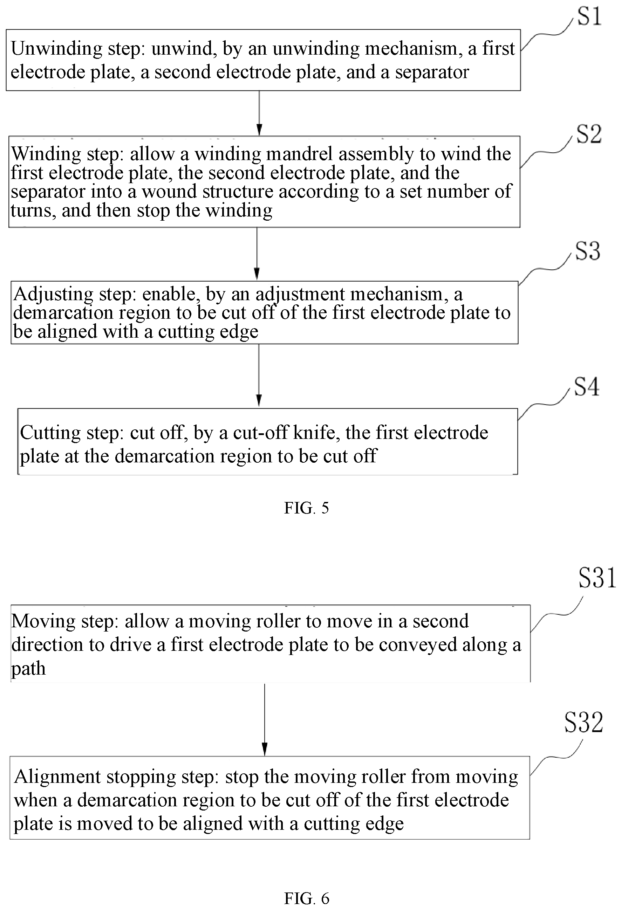

FIG. 5 is a flowchart of a method for cell winding according to some embodiments of the present disclosure.

The embodiments of the present disclosure provide a method for cell winding using cell winding equipment. The cell winding equipment includes an unwinding mechanism, a winding mandrel assembly, and an electrode plate cut-off apparatus 10. The unwinding mechanism is configured to be capable of unwinding a first electrode plate 100, a second electrode plate 200, and a separator 300. The winding mandrel assembly is configured to be capable of stacking the first electrode plate 100, the second electrode plate 200, and the separator 300 unwound by the unwinding mechanism and winding same into a wound structure 1000, and at least one layer of the separator 300 is interposed between any adjacent first electrode plate 100 and second electrode plate 200. The electrode plate cut-off apparatus includes a cut-off knife 2 and an adjustment mechanism 1, a path through which the first electrode plate 100 passes is disposed on the adjustment mechanism 1 and a cutting edge side of the cut-off knife 2, the adjustment mechanism 1 is configured to enable a demarcation region to be cut off 101 of the first electrode plate 100 to be aligned with a cutting edge, and the cut-off knife 2 is configured to be capable of cutting off the first electrode plate 100 at the demarcation region to be cut off 101.

As shown in FIG. 5, the method for cell winding includes the following steps.

In an unwinding step S1, an unwinding mechanism unwinds a first electrode plate, a second electrode plate, and a separator.

In a winding step S2, a winding mandrel assembly winds the first electrode plate, the second electrode plate, and the separator into a wound structure according to a set number of turns, and then the winding is stopped.

In an adjusting step S3, an adjustment mechanism enables a demarcation region to be cut off of the first electrode plate to be aligned with a cutting edge.

In a cutting step S4, a cut-off knife cuts off the first electrode plate at the demarcation region to be cut off.

During the above winding process, the demarcation region to be cut off 101 of the first electrode plate 100 is adjusted to be aligned with the cutting edge of the cut-off knife 2 by the adjustment mechanism 1. In this way, the cut-off knife 2 can accurately cut off the first electrode plate 100 at the demarcation region to be cut off 101, such that the lengths of the first electrode plates 100 of the formed bare cells are consistent, thereby improving the consistency of the bare cells, and improving the use performance of the battery.

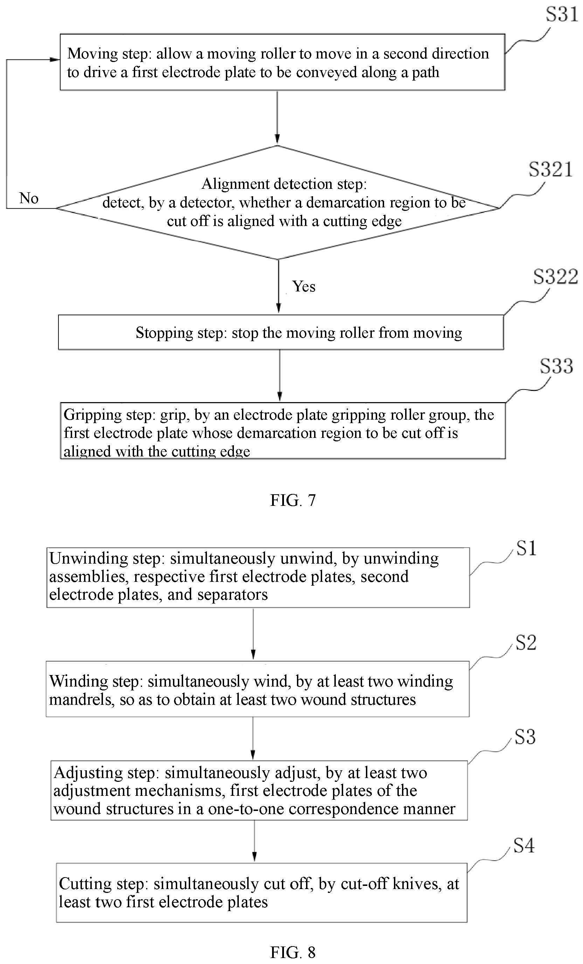

FIG. 6 is a flowchart of an adjusting step in a method for cell winding according to some embodiments of the present disclosure; and FIG. 7 is another flowchart of an adjusting step in a method for cell winding according to some embodiments of the present disclosure.

In some embodiments of the present disclosure, the adjustment mechanism 1 includes at least one moving roller 11 and at least two positioning rollers 12. The at least two positioning rollers 12 are fixed in position and are spaced apart in a first direction, the moving roller 11 is configured to be capable of reciprocating between adjacent positioning rollers 12 in a second direction intersecting with the first direction. Each positioning roller 12 is disposed on one side of the first electrode plate 100, and each moving roller 11 is disposed on another side of the first electrode plate 100.

As shown in FIG. 6, the adjusting step includes the following steps.

In a moving step S31, a moving roller moves in a second direction to drive a first electrode plate to be conveyed along a path.

In an alignment stopping step S32, the moving roller stops moving when a demarcation region to be cut off of the first electrode plate is moved to be aligned with a cutting edge.

The position of the demarcation region to be cut off 101 is first adjusted through the movement of the moving roller 11. When the demarcation region to be cut off 101 is moved to be aligned with the cutting edge, the moving roller 11 stops moving, so as to maintain the state in which the demarcation region to be cut off 101 is aligned with the cutting edge, such that the cut-off knife 2 can accurately cut the demarcation region to be cut off 101 subsequently, thereby improving the cutting accuracy.

In some embodiments of the present disclosure, the adjustment mechanism 1 includes a detector configured to detect whether the demarcation region to be cut off 101 of the first electrode plate 100 is aligned with the cutting edge.

As shown in FIG. 7, the alignment stopping step includes the following steps.

In an alignment detection step S321, the detector detects whether the demarcation region to be cut off is aligned with the cutting edge. When the demarcation region to be cut off is aligned with the cutting edge, a stopping step is performed, and when the demarcation region to be cut off is not aligned with the cutting edge, the moving step is performed.

In a stopping step S322, the moving roller stops moving.

When the detector detects that the demarcation region to be cut off 101 of the first electrode plate 100 is not aligned with the cutting edge, the moving roller 11 continues to move. When the detector detects that the demarcation region to be cut off 101 of the first electrode plate 100 is aligned with the cutting edge, the moving roller 11 stops moving, maintaining the state in which the demarcation region to be cut off 101 is aligned with the cutting edge. Then, when the cut-off knife 2 cuts the first electrode plate 100, the cut-off knife 2 can accurately cut off the first electrode plate 100 at the demarcation region to be cut off 101.

In this way, the automated detection of the movement position of the demarcation region to be cut off 101 is achieved. This helps improve the detection accuracy.

In some embodiments of the present disclosure, the electrode plate cut-off apparatus 10 further includes an electrode plate gripping roller group 4, and the electrode plate gripping roller group 4 is configured to grip the first electrode plate 100 when the demarcation region to be cut off 101 of the first electrode plate 100 is aligned with the cutting edge.

Between the stopping step and the cutting step,
a gripping step S33, where the electrode plate gripping roller group grips the first electrode plate whose demarcation region to be cut off is aligned with the cutting edge, is included.

The electrode plate gripping roller group 4 can grip the first electrode plate 100 to limit the position of the first electrode plate 100. In this way, the state in which the demarcation region to be cut off 101 is aligned with the cutting edge is more accurately maintained, thereby improving the cutting accuracy, improving the consistency of the bare cells, and thus improving the use performance of the battery.

FIG. 8 is another flowchart of a method for cell winding according to some embodiments of the present disclosure.

In some embodiments of the present disclosure, the unwinding mechanism includes at least two unwinding assemblies, the unwinding assemblies are all configured to unwind the first electrode plate 100, the second electrode plate 200, and the separator 300, the winding mandrel assembly includes at least two winding mandrels 301, the at least two winding mandrels 301 can simultaneously wind so as to obtain at least two wound structures 1000, at least two adjustment mechanisms 1 are provided, and the adjustment mechanisms 1 are configured to adjust first electrode plates 100 of the wound structures 1000 in a one-to-one correspondence manner.

As shown in FIG. 8, the method for cell winding includes the following steps.

In an unwinding step S1, unwinding assemblies simultaneously unwind respective first electrode plates, second electrode plates, and separators.

In a winding step S2, at least two winding mandrels simultaneously wind so as to obtain at least two wound structures.

In an adjusting step S3, at least two adjustment mechanisms simultaneously adjust first electrode plates of the wound structures in a one-to-one correspondence manner.

In a cutting step S4, cut-off knives simultaneously cut off at least two first electrode plates.

In this way, the at least two wound structures 1000 can be obtained by simultaneously winding, thereby improving the winding efficiency. In addition, the adjustment mechanisms 1 can simultaneously adjust the first electrode plates 100 of the at least two wound structures 1000, and the cut-off knives 2 can cut off the at least two adjusted first electrode plates 100 at one time at the demarcation regions to be cut off 101, thereby improving the production efficiency of the bare cells while maintaining the consistency of the bare cells.

Specific examples of some embodiments of the present disclosure will be described below with reference to the drawings.

As a specific example, the cell winding equipment includes two unwinding assemblies, two winding mandrels 301, and two adjustment mechanisms 1. The unwinding assemblies are all configured to unwind the negative electrode plate (first electrode plate 100), the positive electrode plate (second electrode plate 200), and the separation film (separator 300). The two winding mandrels 301 are configured to wind so as to obtain the wound structures 1000, respectively. The adjustment mechanisms 1 are configured to adjust first electrode plates 100 of the wound structures 1000 in a one-to-one correspondence manner. The two first electrode plates 100 adjusted by the two adjustment mechanisms 1 are simultaneously cut off by the cut-off knives 2.

In this way, a single winding process performed by one piece of cell winding equipment can produce two bare cells without affecting the winding time of a single cell, thereby significantly improving the production efficiency of the bare cell winding process and reducing the production cost per bare cell. The blue adhesive at the cut-off position of the negative electrode plate is adjusted to be aligned with the cut-off knife 2 by the adjustment mechanism 1. Thus, the cut-off knife 2 can accurately cut off the negative electrode plate at the blue adhesive at the cut-off position, such that the lengths of the negative electrode plates of the formed bare cells are consistent, thereby improving the consistency of the bare cells, and improving the use performance of the battery.

The above embodiments are only used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of this specification of the present disclosure. In particular, the technical features mentioned in the embodiments can be combined in any manner, provided that there is no structural conflict.

### Industrial applicability

The present disclosure discloses cell winding equipment and a method for cell winding. The cell winding equipment includes an unwinding mechanism, a winding mandrel assembly, and an electrode plate cut-off apparatus. The unwinding mechanism is configured to be capable of unwinding a first electrode plate, a second electrode plate, and a separator. The winding mandrel assembly is configured to be capable of stacking the first electrode plate, the second electrode plate, and the separator unwound by the unwinding mechanism and winding same into a wound structure. At least one layer of the separator is interposed between adjacent first electrode plate and second electrode plate. The electrode plate cut-off apparatus includes a cut-off knife and an adjustment mechanism, a path through which the first electrode plate passes is disposed on the adjustment mechanism and a cutting edge side of the cut-off knife, the adjustment mechanism is configured to enable a demarcation region to be cut off of the first electrode plate to be aligned with a cutting edge of the cut-off knife, and the cut-off knife is configured to be capable of cutting off the first electrode plate at the demarcation region to be cut off. The adjustment mechanism of the cell winding equipment can adjust the demarcation region to be cut off to be aligned with the cutting edge of the cut-off knife, and the cut-off knife can accurately cut off the first electrode plate, thereby improving the consistency of the bare cells, and improving the use performance of the battery.

## Claims

1. Cell winding equipment, comprising:
an unwinding mechanism configured to be capable of unwinding a first electrode plate, a second electrode plate, and a separator;
a winding mandrel assembly configured to be capable of stacking the first electrode plate, the second electrode plate, and the separator unwound by the unwinding mechanism and winding same into a wound structure, at least one layer of the separator being interposed between any adjacent first electrode plate and second electrode plate; and
an electrode plate cut-off apparatus comprising a cut-off knife and an adjustment mechanism, a path through which the first electrode plate passes being disposed on the adjustment mechanism and a cutting edge side of the cut-off knife, the adjustment mechanism being configured to enable a demarcation region to be cut off of the first electrode plate to be aligned with a cutting edge of the cut-off knife, and the cut-off knife being configured to be capable of cutting off the first electrode plate at the demarcation region to be cut off;
wherein the adjustment mechanism comprises at least one moving roller and at least two positioning rollers, the at least two positioning rollers are fixed in position and are spaced apart in a first direction, the moving roller is configured to be capable of reciprocating between adjacent positioning rollers in a second direction intersecting with the first direction,
each positioning roller is disposed on one side of the first electrode plate, and each moving roller is disposed on another side of the first electrode plate.

2. The cell winding equipment according to claim 1, wherein the adjustment mechanism further comprises a first driving member, and the first driving member is in driving connection with the moving roller and is capable of driving the moving roller to reciprocate in the second direction.

3. The cell winding equipment according to claim 1 or 2, wherein the electrode plate cut-off apparatus further comprises a detector, and the detector is configured to detect whether the demarcation region to be cut off of the first electrode plate is aligned with the cutting edge.

4. The cell winding equipment according to claim 3, wherein the detector comprises an encoder and/or a detection camera.

5. The cell winding equipment according to any one of claims 1 to 4, wherein a number of cut-off knives is at least two, and the cut-off knives are disposed opposite to each other across the path.

6. The cell winding equipment according to any one of claims 1 to 5, wherein in a conveying direction of the first electrode plate, the cut-off knife is positioned upstream of the adjustment mechanism.

7. The cell winding equipment according to any one of claims 1 to 6, wherein the electrode plate cut-off apparatus further comprises an electrode plate gripping roller group, and the electrode plate gripping roller group is configured to grip the first electrode plate when the demarcation region to be cut off of the first electrode plate is aligned with the cutting edge.

8. The cell winding equipment according to any one of claims 1 to 7, wherein the unwinding mechanism comprises at least two unwinding assemblies, the unwinding assemblies are all configured to unwind the first electrode plate, the second electrode plate, and the separator,
the winding mandrel assembly comprises at least two winding mandrels, the at least two winding mandrels are capable of simultaneously winding so as to obtain at least two wound structures,
at least two adjustment mechanisms are provided, and the adjustment mechanisms are configured to adjust first electrode plates of the wound structures in a one-to-one correspondence manner.

9. The cell winding equipment according to claim 8, wherein the winding mandrel assembly further comprises a winding mandrel mounting shaft, the winding mandrels are coaxially connected to the winding mandrel mounting shaft, and the at least two winding mandrels are spaced apart from each other in sequence in an axial direction of the winding mandrel mounting shaft and are capable of rotating together with the winding mandrel mounting shaft.

10. The cell winding equipment according to claim 8 or 9, wherein the unwinding assembly comprises:
a first electrode plate unwinding roller configured to unwind the first electrode plate;
a second electrode plate unwinding roller configured to unwind the second electrode plate; and
a separator unwinding roller configured to unwind the separator;
wherein in a same unwinding assembly, the first electrode plate unwound by the first electrode plate unwinding roller, the second electrode plate unwound by the second electrode plate unwinding roller, and the separator unwound by the separator unwinding roller are wound into one wound structure through one winding mandrel.

11. The cell winding equipment according to any one of claims 8 to 10, wherein each winding mandrel is capable of being transferred between a winding station and an electrode plate cut-off station, the winding mandrel is configured for winding so as to obtain the wound structure in a case that the winding mandrel is transferred to the winding station, and in a case that the winding mandrel is transferred to the electrode plate cut-off station, the first electrode plate of the wound structure wound around the winding mandrel passes through the path of the adjustment mechanism and the cutting edge side of the cut-off knife and is cut off at the demarcation region to be cut off by the cut-off knife.

12. The cell winding equipment according to any one of claims 10 to 11, wherein
a first electrode plate tension control mechanism is disposed between each first electrode plate unwinding roller and the winding mandrel assembly, and the first electrode plate tension control mechanism is configured to control tension of the first electrode plate unwound by the first electrode plate unwinding roller; and/or
a second electrode plate tension control mechanism is disposed between each second electrode plate unwinding roller and the winding mandrel assembly, and the second electrode plate tension control mechanism is configured to control tension of the second electrode plate unwound by the second electrode plate unwinding roller; and/or
a separator tension control mechanism is disposed between each separator unwinding roller and the winding mandrel assembly, and the separator tension control mechanism is configured to control tension of the separator unwound by the separator unwinding roller.

13. The cell winding equipment according to any one of claims 10 to 12, wherein
a first electrode plate deviation correction system is disposed between the first electrode plate unwinding roller and the winding mandrel assembly, and the first electrode plate deviation correction system is configured to correct a position of the first electrode plate unwound by the first electrode plate unwinding roller in a winding axial direction of the first electrode plate; and/or
a second electrode plate deviation correction system is disposed between the second electrode plate unwinding roller and the winding mandrel assembly, and the second electrode plate deviation correction system is configured to correct a position of the second electrode plate unwound by the second electrode plate unwinding roller in a winding axial direction of the second electrode plate; and/or
a separator deviation correction system is disposed between the separator unwinding roller and the winding mandrel assembly, and the separator deviation correction system is configured to correct a position of the separator unwound by the separator unwinding roller in a winding axial direction of the separator.

14. A method for cell winding using cell winding equipment, the cell winding equipment comprising:
an unwinding mechanism configured to be capable of unwinding a first electrode plate, a second electrode plate, and a separator;
a winding mandrel assembly configured to be capable of stacking the first electrode plate, the second electrode plate, and the separator unwound by the unwinding mechanism and winding same into a wound structure, at least one layer of the separator being interposed between any adjacent first electrode plate and second electrode plate; and
an electrode plate cut-off apparatus comprising a cut-off knife and an adjustment mechanism, a path through which the first electrode plate passes being disposed on the adjustment mechanism and a cutting edge side of the cut-off knife, the adjustment mechanism being configured to enable a demarcation region to be cut off of the first electrode plate to be aligned with a cutting edge of the cut-off knife, and the cut-off knife being configured to be capable of cutting off the first electrode plate at the demarcation region to be cut off;
the method for cell winding comprising:
an unwinding step, wherein the unwinding mechanism unwinds the first electrode plate, the second electrode plate, and the separator;
a winding step, wherein the winding mandrel assembly winds the first electrode plate, the second electrode plate, and the separator into the wound structure according to a set number of turns, and then the winding is stopped;
an adjusting step, wherein the adjustment mechanism enables the demarcation region to be cut off of the first electrode plate to be aligned with the cutting edge; and
a cutting step, wherein the cut-off knife cuts off the first electrode plate at the demarcation region to be cut off;
wherein the adjustment mechanism comprises at least one moving roller and at least two positioning rollers, the at least two positioning rollers are fixed in position and are spaced apart in a first direction, the moving roller is configured to be capable of reciprocating between adjacent positioning rollers in a second direction intersecting with the first direction, each positioning roller is disposed on one side of the first electrode plate, and each moving roller is disposed on another side of the first electrode plate;
the adjusting step comprises:
a moving step, wherein the moving roller moves in the second direction to drive the first electrode plate to be conveyed along the path; and
an alignment stopping step, wherein the moving roller stops moving when the demarcation region to be cut off of the first electrode plate is moved to be aligned with the cutting edge.

15. The method for cell winding according to claim 14, wherein the adjustment mechanism comprises a detector, and the detector is configured to detect whether the demarcation region to be cut off of the first electrode plate is aligned with the cutting edge;
the alignment stopping step comprises:
an alignment detection step, wherein the detector detects whether the demarcation region to be cut off is aligned with the cutting edge, when the demarcation region to be cut off is aligned with the cutting edge, a stopping step is performed, and when the demarcation region to be cut off is not aligned with the cutting edge, the moving step is performed; and
the stopping step, wherein the moving roller stops moving.

16. The method for cell winding according to claim 15, wherein the electrode plate cut-off apparatus further comprises an electrode plate gripping roller group, and the electrode plate gripping roller group is configured to grip the first electrode plate when the demarcation region to be cut off of the first electrode plate is aligned with the cutting edge;
between the stopping step and the cutting step,
a gripping step, wherein the electrode plate gripping roller group grips the first electrode plate whose demarcation region to be cut off is aligned with the cutting edge, is comprised.

17. The method for cell winding according to any one of claims 14 to 16, wherein the unwinding mechanism comprises at least two unwinding assemblies, and the unwinding assemblies are all configured to unwind the first electrode plate, the second electrode plate, and the separator, the winding mandrel assembly comprises at least two winding mandrels, the at least two winding mandrels are capable of simultaneously winding so as to obtain at least two wound structures, at least two adjustment mechanisms are provided, and the adjustment mechanisms are configured to adjust first electrode plates of the wound structures in a one-to-one correspondence manner;
in the unwinding step, the unwinding assemblies simultaneously unwind respective first electrode plates, second electrode plates, and separators;
in the winding step, the at least two winding mandrels simultaneously wind so as to obtain the at least two wound structures;
in the adjusting step, the at least two adjustment mechanisms simultaneously adjust the first electrode plates of the wound structures in a one-to-one correspondence manner;
in the cutting step, cut-off knives simultaneously cut off at least two first electrode plates.
